**Europäisches Patentamt**

**European Patent Office**

**Office européen des brevets**

(19)

(11) Numéro de publication: **0 045 239**
**B1**

(12) # FASCICULE DE BREVET EUROPEEN

(45) Date de publication du fascicule du brevet:
03.07.85

(51) Int. Cl.⁴: **H 02 G 15/10, H 02 G 15/117**

(21) Numéro de dépôt: **81401133.4**

(22) Date de dépôt: **16.07.81**

(54) **Procédé de réalisation de protection de jonctions de conducteurs électriques.**

(30) Priorité: **25.07.80 FR 8016439**

(43) Date de publication de la demande:
**03.02.82 Bulletin 82/5**

(45) Mention de la délivrance du brevet:
**03.07.85 Bulletin 85/27**

(84) Etats contractants désignés:
**AT BE CH DE GB IT LI LU NL SE**

(56) Documents cités:
**FR - A - 1 470 590**
**FR - A - 2 152 672**
**FR - A - 2 224 906**
**US - A - 2 967 795**

**REVIEW OF THE ELECTRICAL COMMUNICATION LABORATORIES, vol. 25, NOS, 3-4, mars-avril 1977 Tokyo, JP N. KAGEYAMA: "Splice Enclosure Using Polyurethane Compound for Local Pressurized Cables", pages 260-270**

(73) Titulaire: **SOCIETE INDUSTRIELLE DE LIAISONS ELECTRIQUES - SILEC, 64bis, rue de Monceau, F-75008 Paris (FR)**

(72) Inventeur: **Chazelas, Elie, Saint-Germain Laval, F-77130 Montereau (FR)**

(74) Mandataire: **Chereau, Louis et al, Novapat-Cabinet Chereau 107, Boulevard Péreire, F-75017 Paris (FR)**

## Description

La présente invention concerne les protections de jonctions et dérivations de conducteurs électriques, et, plus particulièrement, les protections d'épissures de câbles téléphoniques pressurisés.

Les problèmes de protection de jonctions de raccordements ou d'épissures de câbles sont devenus particulièrement aigus avec les câbles téléphoniques exploités sous maintenance pneumatique. Cette maintenance pneumatique s'effectue sous une pression de l'ordre de 500 millibars afin d'éviter toute pénétration d'eau à l'intérieur des câbles, parfois concurremment avec l'utilisation de compounds graisseux. Ces nouvelles dispositions ont entraîné le besoin de protections d'épissures assurant, à l'endroit des jonctions des câbles, une étanchéité à l'air interne en pression et également une barrière à toutes les pénétrations externes, liquides ou gazeuses. Des spécifications sévères demandent en outre que ces protections de jonctions aient des caractéristiques mécaniques suffisantes pour résister à l'éclatement, à l'écrasement et aux chocs mécaniques externes, les protections d'épissures devant être en outre démontables en tout ou partie sans risque de détérioration des éléments de la jonction et permettre ainsi d'intervenir, par exemple pour modifier la configuration du réseau. D'autre part, la mise en œuvre des protections d'épissures doit s'effectuer sans flamme afin d'éviter tout risque de brûlure du personnel et des câbles.

Les techniques de protection actuelles font appel à des matériels sophistiqués, compliqués à mettre en œuvre et constitués de pièces mécaniques assemblées par serrage, dont l'efficacité n'est pas garantie. De plus, les dimensions de ces matériels sont souvent trop importantes en diamètre et insuffisantes en longueur. Ces matériels occupent ainsi généralement trop de place dans les chambres de raccordement souterraines et les manchons mécaniques de protection peuvent se déformer en service et perdre leur étanchéité. Des difficultés apparaissent également lorsqu'il faut intervenir sur des manchons déformés, dont les constituants sont le plus souvent non réutilisables. De plus, avec ce type de matériel, il est nécessaire de posséder un outillage de mise en œuvre complexe et encombrant, comprenant notamment un compas à découper de précision muni de divers couteaux.

Dans le montage des protections d'épissures de câbles de télécommunication, il faut veiller à ce que les sollicitations à la traction, à la compression et à la torsion qui s'exercent sur les extrémités des câbles n'agissent pas d'une manière nuisible sur les épissures se trouvant à l'intérieur de la protection ni sur les joints d'étanchéité au droit des extrémités d'introduction des câbles dans la protection. Pour les dispositifs existants, il a été ainsi prévu des dispositifs dits de réception et blocage de câbles qui s'opposent à une torsion, à un déplacement en translation du câble par rapport aux manchons mécaniques de protection. Ces dispositifs ne peuvent être efficaces que si l'ensemble constitué final résiste à la pression interne et aux chocs extérieurs. Or, il a été constaté que les dispositifs à serrage mécanique pour réaliser de tels systèmes d'étanchéité et de blocage sont fréquemment inefficaces de par la nécessité de tolérances étroites et d'ajustements serrés. De plus, les manchons de protection constitués de pièces mécaniques nécessitent un nombre très important d'éléments différents assemblables pour couvrir tous les modèles de câbles. Or, comme évoqué ci-dessus, les spécifications techniques requièrent une parfaite tenue des jonctions lors d'essais particulièrement sévères comprenant notamment:

essais à une surpression d'essai à 1 bar au-dessus de la pression atmosphérique durant 50 cycles à −30°C, 6 heures, +70°C, 6 heures (chocs thermiques),

essais en immersion d'eau avec surpression de 1 bar durant 50 cycles: +10°C, 5 heures, +55°C, 6 heures, etc...,

essais de vibrations en surpression de 1 bar: amplitude des vibrations 3 mm, fréquence 10 Hz, durée 10 jours,

essais de traction sur les câbles sortant de la protection: l'effort est de 100 daN durant 24 heures et surpression de 1 bar,

essais de torsion sur les câbles sortants: la protection étant immobilisée, l'effort est appliqué de telle sorte que les câbles tournent de 45° de part et d'autre de la position de repos avec surpression de 1 bar; l'effort est de 2 torsions dans chaque position appliqué à 500 mm de la sortie de la protection, maintenu 10 minutes dans chaque position,

essais de flexion: 5 séries de 4 flexions à 60° par rapport à la position de repos dans deux plans perpendiculaires; les câbles sont maintenus 5 minutes dans chaque position avec surpression de 1 bar, l'effort étant appliqué à un mètre de la sortie de la protection,

essais de chocs mécaniques avec surpression de 1 bar, produits par un outil de diamètre 20 mm, pesant 1 kg, tombant de 2 mètres,

essais d'écrasement avec surpression de 1 bar produit par une masse de 80 daN,

essais de fluage avec surpression de 1 bar produit par une masse de 80 daN appliquée durant 120 heures,

essais chimiques tels que:

– résistance en milieu acide: 5 jours dans l'acide chlorhydrique ajusté au pH 2 avec surpression de 1 bar plus deux cycles en essai d'immersion,

– résistance en milieu basique: 5 jours dans l'hydroxyde de sodium ajusté au pH 12, avec surpression de 1 bar plus deux cycles en essai d'immersion,

– résistance en milieu tensio-actif: 5 jours dans une solution: contenant 5% de produit vendu par la société PROLABO sous la marque DECON 90 avec surpression de 1 bar plus deux cycles en essai d'immersion,

– résistance aux solvants: 5 jours dans du pétrole (produit commercialisé sous la marque KER-DANE) avec surpression de 1 bar plus deux cycles en essai d'immersion,

– vérification de la compatibilité des produits entre eux et avec les composants de l'épissure et isolation des fils ou conducteurs ou objets protégés,

essais de tenue au rayonnement ultra-violet sous trois lampes PHILIPS type HPR 125 watts, durant 1000 heures.

On a encore proposé (Review of the Electrical Communication Laboratories, Vol. 25, n° 3–4 – March-April 1977) un dispositif comportant deux boîtes superposées, une boîte interne enveloppant l'épissure et une boîte externe enveloppant la première, pour couler du polyuréthane entre les boîtes. Ces dispositifs ne sont pas adaptables aux différents cas de jonction rencontrés, longueur, courbure, etc.

On a également proposé de garnir une jonction d'un rubannage poreux (brevet US 2 967 795) recouvert d'un rubannage étanche, puis d'injecter à travers le rubannage étanche une résine solidifiable imprégnant le rubannage poreux. Cette méthode n'est pas davantage applicable aux câbles pressurisés.

La présente invention a précisément pour objet de proposer un procédé de réalisation de protection de jonctions droites au divisées de conducteurs électriques, et plus particulièrement d'épissures de câbles de télécommunications pressurisées particulièrement simple à mettre en œuvre in situ, de faible coût de revient, permettant la réalisation de jonctions étanches et fiables et n'entraînant qu'un faible sur-dimensionnement par rapport aux épissures, convenant à toutes les configurations de jonctions et à leur agencement in situ même dans des espaces confinés, et respectant les spécifications imposées.

Pour ce faire, la présente invention a pour objet un procédé de réalisation de protection de jonction de conducteurs électriques isolés, plus particulièrement de câbles de télécommunication pressurisés, comprenant les étapes successives:

a) on dispose autour de la zone de jonction une première couche d'arrêt interne souple épousant étroitement le profil de l'épissure et se prolongeant sur les extrémités de la gaine du câble avec un léger débordement axial;

b) on dispose autour de chaque extrémité de conducteur au moins une bague en matériau plastique souple;

c) on dispose autour de la couche interne et des bagues une couche de support d'imprégnation en un matériau comportant des vides;

d) on dispose autour de la couche support d'imprégnation une deuxième couche d'arrêt externe étanche souple, épousant la couche support d'imprégnation;

e) on injecte entre les couches externe et interne, dans la couche support d'imprégnation, une résine polymérisable à froid.

Selon une autre caractéristique de la présente invention, pour la réalisation d'épissures divisées pour la connexion, d'un côté, d'au moins deux conducteurs en parallèle, il est prévu de disposer autour des conducteurs parallèles, tout d'abord au niveau de l'extrémité adjacente de la première couche d'arrêt, puis à l'extérieur de la ou des bagues adjacentes, un anneau de mastic auto-amalgamant, les anneaux correspondants des conducteurs parallèles étant comprimés par un rubannage autour de l'ensemble des conducteurs avant la mise en place, également autour de ces anneaux comprimés, de la couche support puis de la couche externe d'arrêt.

D'autres caractéristiques et avantages de la présente invention ressortiront de la description suivant de modes de réalisation donnés à titre illustratif mais nullement limitatif faite en relation avec les dessins annexés sur lesquels:

La figure 1 représente une jonction bout à bout réalisée par le procédé selon la présente invention;

La figure 2 représente une épissure divisée de câbles téléphoniques obtenue par le procédé selon la présente invention; et

La figure 3 représente à plus grande échelle, le dispositif d'injection de fluide à clapet équipant les jonctions des figures 1 et 2.

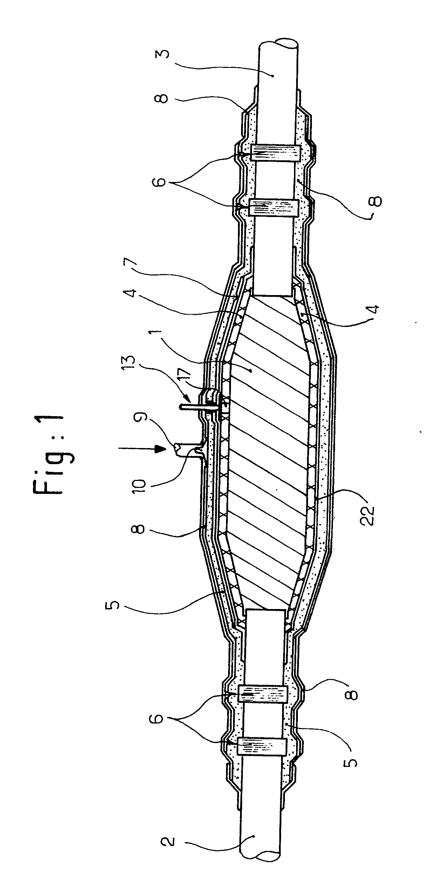

On a représenté sur la figure 1, une jonction ou épissure 1 entre deux extrémités aboutées de câbles 2 et 3. Conformément à la présente invention, autour de l'épissure 1, est mise en place une sous-couche ou première couche d'arrêt interne souple 4 épousant étroitement le profil de l'épissure, et débordant légèrement axialement de l'épissure pour se prolonger sur les gaines des câbles 2 et 3 et présentant une épaisseur contrôlée supérieure à 3 mm, par exemple de l'ordre de 5 mm. A distance des extrémités de l'épissure 1, sont placées autour des câbles 2 et 3 des paires de bagues 6 en mastic ou en élastomère. Autour de la couche interne 4 est disposée une couche 22 étanche à la résine qui sera injectée en phase finale et réalisée par exemple par rubannage d'une bande adhésive ou par enroulement d'un film mince adhésif ou non. Autour de cette couche étanche 22 et des bagues 6 est appliquée une couche support 5 en un matériau présentant des vides, avec éventuellement interposition locale entre cette couche support et la couche interne 4 d'un drain 7 s'étendant longitudinalement ou enroulé et constitué par exemple d'un tube plastique perforé ou d'un grillage en matière plastique de quelques centimètres de large. La couche étanche 22 peut également être solidaire de la couche interne 4 ou bien de la couche support 5. On dispose ensuite autour de la couche support, et se prolongeant axialement au-delà de cette dernière, une couche d'arrêt externe 8 étanche résistant à la pression d'injection avec aménagement dans celle-ci d'une buse d'injection 9, équipée d'un clapet anti-retour 10 et débouchant dans l'espace entre la couche externe 8 et la couche support intermédiaire 5. On a ainsi réalisé, au niveau de la jonction, un assemblage d'injection et de moulage délimité par les première et seconde couches d'arrêt 4 et 8 et occupés en majeure partie par une armature d'imprégnation pour une résine polymérisable à froid injectée par la buse 9 et se répandant uniformément dans tout l'espace compris entre la couche d'arrêt externe 8 d'une part, la couche d'arrêt interne 4 et les gaines des câbles 2 et 3 d'autre part. Après polymérisation, la résine prend la forme conférée par la couche d'arrêt externe 8, et la structure d'arrêt interne 4, 22, l'étanchéité de la jonction étant réalisée par les bagues 6 sous l'effet du retrait volumique de la résine qui comprime ces bagues, en renforçant en outre l'adhérence entre le bloc de résine polymérisée et les extrémités des câbles.

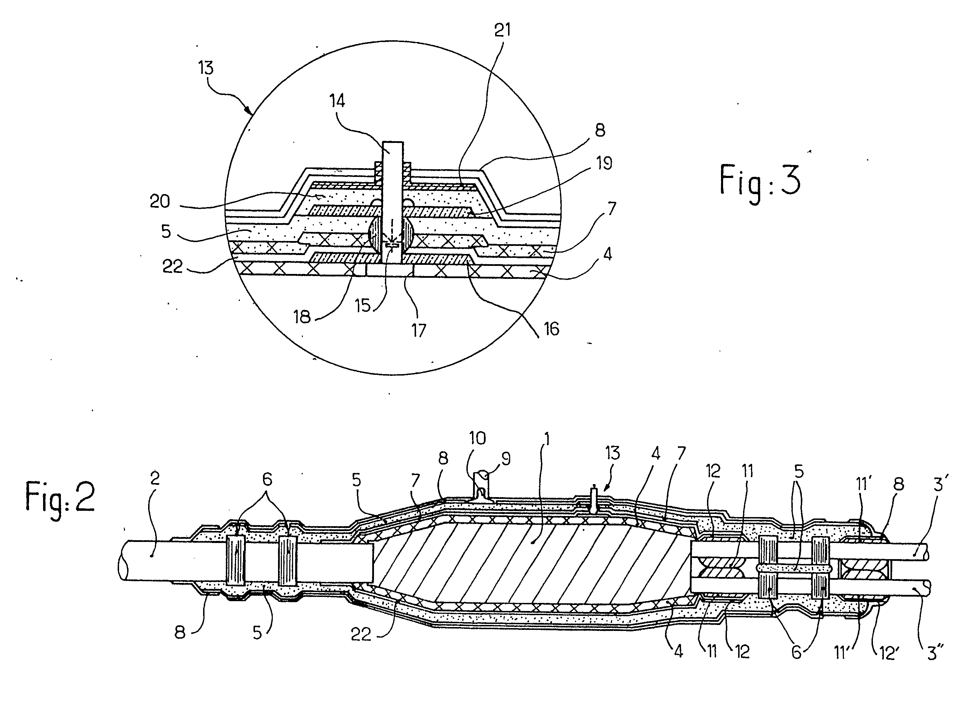

On a représenté sur la figure 2, une épissure divisée de jonction entre un premier câble 2 et deux câbles parallèles 3' et 3''. Les étapes de procédé précédentes se retrouvent pour la réalisation de cette jonction, si ce n'est que, en vue de l'injection de la résine, il est prévu, conformément à un aspect de la présente invention, l'aménagement d'anneaux d'étranchéité 11 et 11' entre les conducteurs 3' et 3''. En effet, après la mise en place de la première couche d'arrêt interne 4 et avant la mise en place des bagues d'étanchéité 6, du côté des câbles parallèles 3' et 3'', on dispose, au niveau de l'extrémité adjacente de la première couche d'arrêt interne 4 et autour de chaque câble 3' et 3'' un anneau 11 d'un mastic auto-amalgamant, cette opération étant répétée en aval des bagues 6 adjacentes, après mise en place de celles-ci, pour installer les anneaux extérieurs 11'. Les anneaux correspondants sont comprimés par rubannage 12, respectivement 12', par exemple au moyen d'un ruban adhésif, effectué autour de l'ensemble des câbles 3' et 3'', de sorte que le mastic flue entre ces câbles en obturant parfaitement les interstices et en se maintenant ainsi durant l'injection de la résine par la buse 9 après que la couche support 5, ayant avantageusement, surtout pour plus de deux câbles parallèles, une forme étoilée du côté divisé, et la seconde d'arrêt externe 8 aient été disposées autour de la sous-couche interne 4, des bagues d'étanchéité 6 et des anneaux 11 et 11'.

Selon une caractéristique d'un mode de réalisation, la jonction protégée ainsi réalisée est en outre équipée d'un dispositif d'insufflation d'air à clapet 13. Comme on le voit mieux sur la figure 3, le dispositif comprend un corps de valve de voiture cylindrique 14, équipé intérieurement d'un clapet anti-retour 15 et dont l'extrémité de sortie est pourvue d'une embase 16 constituée d'un disque d'environ 80 mm de diamètre soudé à la partie inférieure du corps de valve 14. Lors du montage, le disque 16 est placé en appui contre la première couche d'arrêt interne 4 en regard d'une lumière 17 formée dans cette dernière si celle-ci est constituée d'un matériau non poreux ou dépourvu de vides. Avant la mise en place de la couche support 5 et, éventuellement, du drain 7, une olive en élastomère 18 est emmanchée sur le corps de valve 14. Quand la couche support 5 a été mise en place, une rondelle taraudée 19 est vissée sur le corps de valve fileté 14 pour comprimer l'olive 18 et la couche support 5 contre l'embase 16. On dispose alors localement, au droit de la valve, une seconde couche de matériau support 20 avantageusement analogue à celui de la couche 5 de façon à déborder sur la périphérie de la rondelle 19. Une rondelle finale 21, par exemple en matière plastique, est à son tour vissée sur le corps de valve 14 pour comprimer la seconde couche de matériau support 20, après quoi la seconde couche d'arrêt externe 8 est appliquée sur la jonction et, notamment, sur la rondelle extérieure 21 de façon à laisser dépasser l'embouchure du corps de valve 14. Ce dispositif permet de traverser d'une manière étanche et solide le stratifié de protection pour, d'une part, insuffler l'air de mise en pression du câble au travers de l'épissure, et, d'autre part, contrôler, le cas échéant, en service la pression interne des câbles par réinjection d'air sous pression dans ceux-ci.

Quels que soient les types de jonction envisagés, la première couche interne 4 doit être souple et réalisée par exemple par enroulage autour de l'épissure de papier de carton ondulé, de feutre, de feuilles de mousse, par exemple de polyuréthane, de grillage métallique ou matière plastique, de film polyéthylène ou en PVC enroulé plusieurs fois pour dépasser une épaisseur de 3 mm ou, pour les jonctions standard, par mise en place d'ébauches préformées, par exemple en mousses phénoliques, polyuréthane ou polyester, à partir de feuilles en matière plastique préformées par déformation à chaud et aspiration sur préforme, ou par injection de matières plastiques. La couche support 5 est avantageusement réalisée en un matelas fibreux constitué de fibres tissées ou non tissées de verre, de carbone, de polyester, de coton, de laine, de polypropylène, de polyamides aromatiques ou de fibres aromatiques, de cellulose, par exemple d'un feutre aiguilleté à fibres de polyester ou à l'aide d'ébauches préformées en fibres, munies d'un liant pour conférer les formes souhaitées mais ajourées pour permettre le passage de la résine injectée, ou en mousses absorbantes. Cette couche peut être également réalisée par rubannage ou enroulement de matériau cellulaire à alvéoles non fermées, par exemple en mousse de polyuréthane, d'une épaisseur moyenne de 1 cm, ou par enroulement de grillage plastique ou métallique, ces derniers matériaux permettant de supprimer le drain 7. La résine injectée dans la couche 5 peut être une résine polyester, époxyde, polyuréthane, acrylique ou phénolique, notamment, par exemple une résine polyester en association avec un durcisseur à base de peroxyde de benzoyle et d'un accélérateur à base d'amine tertiaire, ou des résines époxydes avec leurs systèmes de catalyse. Le mastic à fluabilité peu variable avec la température utilisé pour la formation des anneaux d'étanchéité 11 est à base de silicones ou à base d'élastomères de butyle ou de polyuréthane pour obtenir un mastic ayant une consistance Money sensiblement constante et présentant un fluage variant de 50% à 65% entre −20°C et 40°C sous l'effet de l'application d'une force d'appui de 2 kg pendant 5 minutes. La couche d'arrêt externe 8 peut être réalisée par rubannage d'un produit transparent permettant la visualisation de l'avance de la résine injectée le long de la couche support, par enroulement de films de polyéthylène ou de PVC ou, pour des jonctions standard, par assemblage d'éléments préformés associés par rubannage au moyen d'une bande adhésive ou non adhésive d'un film, ou encore d'ébauches pré-formées.

On obtient ainsi une jonction protégée remplissant les spécifications évoquées plus haut, et formée in situ dans une même suite d'opérations, la résine, en polymérisant, réalisant une structure de coque comprimant les joints d'étanchéité pour réaliser la barrière étanche et enveloppant parfaitement le raccordement des fils tout en épousant étroitement la forme de la jonction avec une très faible surépaisseur, ce qui permet de préparer les épissures avec des tolérances moins serrées, la longueur des épissures n'étant plus limitée, celles-ci pouvant être réalisées indifféremment horizontalement ou verticalement ou dans toute position intermédiaire, la protection de la jonction s'adaptant à toutes les situations de configuration des épissures, courbures, erreurs de côtes, ainsi que les obstacles. Conformément à un aspect de l'invention, la protection de jonction peut être ainsi facilement découpée par exemple à l'aide d'une scie vibrante à plâtre de chirurgie, une scie à main ou un rogne-pied de maréchal ferrant, la première couche interne d'arrêt ou sous-couche 4 ayant une épaisseur contrôlée suffisante pour permettre à la scie découpeuse ou à l'outil de découpe de couper partiellement cette sous-couche sans risque de blesser les produits sous-jacents dans l'épissure. De cette façon, la jonction protégée peut être réparée par découpe locale de la protection, par remise en place d'une portion de la couche support enlevée et de la seconde couche externe, et par une nouvelle injection de résine dans la zone considérée pour recouvrir l'ouverture ainsi provoquée, cette opération valant également pour la réparation d'une ouverture formée accidentellement, dans la protection.

Quoique la présente invention ait été décrite en relation avec des modes de réalisation particuliers, elle ne s'en trouve pas limitée. En particulier, la simplicité du procédé et sa grande souplesse permettent son utilisation normalement pour des câbles téléphoniques pressurisés, mais pour tout type de câble, par exemple les câbles téléphoniques remplis de compounds graisseux, sous plomb isolés au papier sec, les câbles de réseau ou de longues distances.

**Revendications**

1. Procédé de réalisation de protection de jonction de conducteurs électriques isolés, plus particulièrement de câbles de télécommunication pressurisés, comprenant les étapes successives:

a) on dispose autour de la zone de jonction une première couche d'arrêt interne souple (4) épousant étroitement le profil de l'épissure et se prolongeant sur les extrémités de la gaine du câble avec un léger débordement axial;

b) on dispose autour de chaque extrémité de conducteur au moins une bague (6) en matériau plastique souple;

c) on dispose autour de la couche interne (4) et des bagues (6) une couche de support d'imprégnation (5) en un matériau comportant des vides;

d) on dispose autour de la couche support d'imprégnation (5) une deuxième couche d'arrêt externe (8) étanche souple, épousant la couche support d'imprégnation;

e) on injecte entre les couches externe et interne, dans la couche support d'imprégnation, une résine polymérisable à froid.

2. Procédé selon la revendication 1, caractérisé en ce que l'on dispose en outre une couche étanche (22) à l'interface entre la première couche d'arrêt interne (4) et la couche support d'imprégnation (5).

3. Procédé selon la revendication 1 ou la revendication 2, pour la protection de raccordement ou d'épissures divisées présentant, d'un côté, au moins deux conducteurs en parallèle, caractérisé en ce qu'il comprend en outre, après l'étape (a) et après l'étape (b), les étapes de disposer autour des conducteurs parallèles (3', 3'') respectivement au niveau de l'extrémité adjacente de la première couche d'arrêt (4), et à l'extérieur de la bague d'étanchéité adjacente (6) un anneau de mastic, les anneaux correspondants (11, 11') des conducteurs parallèles étant comprimés par un rubannage (12, 12') autour de l'ensemble de ces conducteurs.

4. Procédé selon la revendication 4, caractérisé en ce que le mastic est à fluabilité variant peu avec la température.

5. Procédé selon l'une quelconque des revendications précédentes, caractérisé en ce que la couche support (5) est constituée d'un matériau fibreux.

6. Procédé selon l'une quelconque des revendications précédentes, caractérisé en ce que la couche support (5) est constituée par enroulement d'un feutre aiguilleté.

7. Procédé selon l'une quelconque des revendications 1 à 4, caractérisé en ce que la couche support (5) est réalisée par enroulement d'un matériau cellulaire à cellules ouvertes.

8. Procédé selon l'une quelconque des revendications précédentes, caractérisé en ce qu'il comprend, avant l'étape (c), l'étape de disposer localement sur la couche interne (4) un élément de drain (7) s'étendant longitudinalement.

9. Procédé selon l'une quelconque des revendications 1 à 7, caractérisé en ce que la couche support (5) est réalisée par enroulement d'un grillage.

10. Procédé selon l'une quelconque des revendications 1 à 9, caractérisé en ce que la couche d'arrêt externe (8) est réalisée au moins partiellement par enroulement d'un matériau en feuille.

11. Procédé selon l'une quelconque des revendications 1 à 9, caractérisé en ce que la couche d'arrêt externe (8) est réalisée au moins partiellement par rubannage d'une bande d'un matériau transparent.

12. Procédé selon l'une quelconque des revendications 1 à 9, caractérisé en ce que la couche d'arrêt externe (8) est réalisée par mise en place d'éléments d'ébauche préformés.

## Claims

1. A process for making a protective arrangement for the coupling of insulated electrical conductors, especially pressurized communication cables, comprising the steps of:
a) disposing a first internal flexible stopping layer (4) around the coupling region, which closely conforms to the splice outline and extends on cable sheath ends from which it slightly protrudes along the axial direction;
b) placing at least a flexible plastic material ring (6) around each conductor end;
c) placing a void material impregnation support layer (5) around the internal layer (4) and the rings (6);
d) placing a second external flexible tight stopping layer (8) around the impregnation support layer (5), which conforms to said impregnation support layer;
e) injecting a cold curable resin between the external and internal layers, into said impregnation support layer.

2. The process as recited in claim 1, wherein a tight layer (22) is further placed at the interface between the first internal stopping layer (4) and the impregnation support layer (5).

3. The process as recited in claim 1 or in claim 2, adapted for protecting connexions or divided splices having, on one side, at least two parallel conductors, further comprising, following step (a) and step (b), the step of disposing around the parallel conductors (3', 3''), respectively at the level of the adjacent end of said first stopping layer (4) and externally to said adjacent tight ring (6), a mastic collar, the corresponding collars (11, 11') of parallel conductors being compressed by tape lapping (12, 12') around the whole conductors.

4. The process as recited in claim 4, wherein said mastic shows yield characteristics which little vary with temperature.

5. The process as recited in any preceding claim, wherein said support layer (5) includes a fibre material.

6. The process as recited in any preceding claim, wherein said support layer (5) is obtained by wrapping a needled felt.

7. The process as recited in any claim 1–4, wherein said support layer (5) is obtained by wrapping an open cell cellular material.

8. The process as recited in any preceding claim, including, prior to step (c), the step of locally disposing a longitudinally extending drain element (7) on said internal layer.

9. The process as recited in any claim 1–7, wherein said support layer (5) is obtained by wrapping a grid.

10. The process as recited in any claim 1–9, wherein said external stopping layer (8) is at least partially obtained by wrapping a sheet material.

11. The process as recited in any claim 1–9, wherein said external stopping layer (8) is at least partially obtained by tape lapping a transparent material strip.

12. The process as recited in any claim 1–9, wherein said external stopping layer (8) is obtained by positionning preformed blank elements.

## Patentansprüche

1. Verfahren zur Ausführung des Schutzes von Verbindungen isolierter elektrischer Leiter, insbesondere für unter Druck stehende Kabel für die Telekommunikation, das die folgenden Schritte aufweist:
a) Anordnen einer weichen inneren Isolierschicht (4) um den Verbindungsbereich herum, die sich eng an die Form des Spleisses anschmiegt und sich über die Enden der Umhüllung des Kabels erstreckt mit einem geringfügigen axialen Übergreifen;
b) Anordnen wenigstens eines Ringes (6) aus weichem Kunststoff um jedes Leiterende;
c) Anordnen einer Imprägniertragschicht (5) aus einem Hohlstellen aufweisenden Material um die Innenschicht (4) und um die Ringe (6) herum;
d) Anordnen einer zweiten äusseren weichen dichten Isolierschicht (8) um die Imprägniertragschicht (8) herum, die sich an die Imprägniertragschicht anschmiegt;
e) Einspritzen eines kaltpolymerisierenden Harzes zwischen die inneren und äusseren Schichten und in die Imprägniertragschicht.

2. Verfahren nach Anspruch 1, dadurch gekennzeichnet, dass zusätzlich eine dichte Schicht (22) auf die Berührungsfläche zwischen der ersten inneren Isolierschicht (4) und der Imprägnierschicht (5) angeordnet wird.

3. Verfahren nach Anspruch 1 oder 2, zum Schutz der Verbindung oder von geteilten Spleissen, wobei auf einer Seite wenigstens zwei parallele Leiter angeordnet sind, dadurch gekennzeichnet, dass es nach dem Schritt a) und nach dem Schritt b) zusätzlich die Schritte aufweist des Anordnens um die parallelen Leiter (3', 3'') herum und auf der entsprechenden Höhe des benachbarten Endes der ersten Isolierschicht (4) ausserhalb des benachbarten Dichtungsringes (6) eines Mastrixringes, wobei die entsprechenden Ringe (11, 11') der parallelen Leiter durch eine Umwicklung (12, 12') der Gesamtheit dieser Leiter komprimiert werden.

4. Verfahren nach Anspruch 3, dadurch gekennzeichnet, dass der Mastrix eine Verformbarkeit aufweist, die sich nur wenig mit der Temperatur ändert.

5. Verfahren nach einem der vorhergehenden Ansprüche, dadurch gekennzeichnet, dass die Tragschicht (5) aus einem faserigen Material besteht.

6. Verfahren nach einem der vorhergehenden Ansprüche, dadurch gekennzeichnet, dass die Tragschicht (5) durch Aufwickeln eines Nadelfilzes gebildet ist.

7. Verfahren nach einem der Ansprüche 1 bis 4, dadurch gekennzeichnet, dass die Tragschicht (5) durch Aufwickeln eines zellenförmigen Stoffes mit offenen Zellen gebildet ist.

8. Verfahren nach einem der vorhergehenden Ansprüche, dadurch gekennzeichnet, dass es vor dem Schritt c) den Schritt des örtlichen Anordnens auf der inneren Schicht (4) eines sich in Längsrichtung erstreckenden Auslassteils (7) aufweist.

9. Verfahren nach einem der Ansprüche 1 bis 7, dadurch gekennzeichnet, dass die Tragschicht (5) durch Aufwickeln eines Gitters gebildet ist.

10. Verfahren nach einem der Ansprüche 1 bis 9, dadurch gekennzeichnet, dass die äussere Isolierschicht (8) wenigstens teilweise durch Aufwickeln eines blattartigen Materials gebildet ist.

11. Verfahren nach einem der Ansprüche 1 bis 9, dadurch gekennzeichnet, dass die äussere Isolierschicht (8) wenigstens teilweise durch Umwickeln mit einem Band aus transparentem Material gebildet ist.

12. Verfahren nach einem der Ansprüche 1 bis 9, dadurch gekennzeichnet, dass die äussere Isolierschicht (8) durch Einsetzen von vorgeformten Rohlingsteilen gebildet ist.

Fig:1

Fig:3

Fig:2